# FASCICULE DE BREVET EUROPEEN

(11) **EP 1 438 169 B1**
(45) Date de publication et mention de la délivrance du brevet: **21.06.2006**
(21) Numéro de dépôt: 02788026.9
(22) Date de dépôt: 18.09.2002
(51) Int. Cl.: B29C 33/30, B29C 33/40, B29C 51/36, B63H 9/06

(54) **DISPOSITIF ET PROCEDE POUR LA FABRICATION DE PANNEAUX A COURBURE TRIDIMENSIONNELLE A PARTIR DE MATERIAU EN FEUILLE, PAR EXEMPLE POUR LE THERMOFORMAGE DE VOILES A PARTIR DE MATERIAU THERMOPLASTIQUE**
VORRICHTUNG UN VERFAHREN ZUM HERSTELLEN VON PLATTEN MIT EINER DREIDIMENSIONALEN KRÜMMUNG AUS FLÄCHENMATERIAL, ZUM BEISPIEL ZUM WÄRMEFORMEN VON SEGELN AUS EINEM THERMOPLASTMATERIAL
DEVICE AND METHOD FOR MAKING PANELS WITH THREE-DIMENSIONAL CURVATURE FROM SHEET MATERIAL, FOR EXAMPLE FOR THERMOFORMING SAILS FROM THERMOPLASTIC MATERIAL

(30) Priorité: 18.09.2001 FR 0112056; 27.12.2001 WO PCT/FR01/04210
(43) Date de publication de la demande: 21.07.2004
(73) Titulaire: Sail Innovation, 35000 Rennes (FR)
(72) Inventeur: Udin, Alexandre, F-35800 St. Lunaire (FR)
(74) Mandataire: Casalonga, Axel
(86) Numéro de dépôt international: PCT/FR2002/003194
(87) Numéro de publication internationale: WO 2003/024688

(56) Documents cités:
- EP-A- 0 056 657
- WO-A-00/20312
- WO-A-01/76863
- WO-A-01/98141
- WO-A-87/07233
- WO-A-02/055380
- FR-A- 2 548 577
- FR-A- 2 607 099
- FR-A- 2 813 677
- GB-A- 1 425 312
- GB-A- 2 268 699
- US-A- 3 004 295
- US-A- 4 723 766
- US-A- 4 731 144
- US-A- 5 151 277
- US-A- 5 470 590

## Description

La présente invention se rapporte à la .fabrication de panneaux à courbure tridimensionnelle à partir de matériau en feuille. Il peut s'agir par exemple mais non exclusivement de la fabrication par thermoformage de voiles à courbure tridimensionnelle à partir d'un matériau thermoplastique en feuille.

De façon traditionnelle, les voiles pour embarcations à voile, qui doivent présenter une courbure tridimensionnelle pour être efficaces (pour "prendre le vent"), sont fabriquées par assemblage par couture de plusieurs panneaux de tissu découpés de telle manière que leur assemblage permette d'obtenir une voile à courbure tridimensionnelle. Cela implique des travaux considérables de calcul de la forme des panneaux, de traçage, de découpage, d'encollage et d'assemblage des panneaux par couture. Du fait de la prépondérance du travail manuel, le résultat est incertain et souvent affecté d'erreurs. De plus, la qualité des voiles ainsi réalisées laisse à désirer, la présence des coutures créant des points d'amorcé de ruptures dus aux trous occasionnés par le passage de l'aiguille de la machine à coudre.

On connaît par ailleurs par le document EP-056 657-A une voile monopièce à courbure tridimensionnelle constituée d'une seule pièce de matériau thermoplastique flexible en feuille, éventuellement renforcé de fibres de polymères thermoplastiques. Le procédé de fabrication de voile tel que décrit consiste à tenir sur ses bords une feuille continue de matériau thermoplastique éventuellement renforcée de fibres de polymère thermoplastique, à chauffer la feuille, à appliquer une pression à la feuille chauffée pour la mettre en forme en l'étirant sélectivement et à la refroidir. Il est précisé sans autres détails que l'étirage du matériau en feuille par application de pression est effectué sur un moule ou une forme courbe, donc sur une surface de moule convexe.

Enfin, on connaît par les documents EP-475 083-A et WO-01/00487-A des voiles en matériaux stratifiés réalisées sur une surface de moule convexe, soit par dépôt successif d'une première feuille souple, de fils continus et d'une seconde feuille souple et par stratification de l'ensemble sur la surface de moule, soit par dépôt successif de deux couches formées chacune de plusieurs panneaux de feuille renforcée de fils, avec décalage des bords des panneaux des deux couches, et par stratification de l'ensemble sur la surface de moule. Selon le document EP-475 083-A, la surface de moule dont la forme correspond à la forme de la voile à fabriquer est définie par plusieurs rangées d'éléments profilés montés sur des lattes flexibles parallèles soutenues chacune sur sa longueur par plusieurs colonnes réglables en hauteur supportées par des traverses d'une armature de support. Ces techniques de fabrication impliquent une mise en oeuvre manuelle longue et sophistiquée de fibres coûteuses et font appel à des dispositifs manquant de souplesse, ce qui réservé les voiles ainsi réalisées à des embarcations de haute compétition.

La présente invention vise d'un manière générale un dispositif de fabrication de panneaux à courbure tridimensionnelle à partir de matériau thermoplastique en feuille et plus particulièrement mais non exclusivement un dispositif de fabrication de voiles à courbure tridimensionnelle, par exemple des voilures monopièces destinées à des embarcations légères et notamment du type grand public, ce dispositif permettant de fabriquer des panneaux à courbure tridimensionnelles et plus particulièrement des voiles à un prix de revient réduit, sans frais de main d'oeuvre élevés.

L'invention vise par ailleurs un dispositif de fabrication de panneaux à courbure tridimensionnelle qui soit de structure simple et d'utilisation souple en permettant de passer rapidement et sans travaux de transformation compliqués et longs à la fabrication de panneaux de formes et de tailles différentes en matériau thermoplastique en feuille.

La présente invention concerne un dispositif selon la revendication 1 et un procédé selon la revendication 11.

Le dispositif objet de la présente invention, destiné à la fabrication de panneaux à courbure tridimensionnelle à partir de matériau thermoplastique en feuille, comprend une empreinte de formage définie par une membrane comprenant une peau élastiquement étirable et un réseau de moyens de déformation sélective de l'empreinte agissant sur ladite membrane pour imprimer à l'empreinte de formage une courbure tridimensionnelle modulable.

La membrane comprend, en plus, un squelette associé à la peau, formé par un réseau de lattes élastiques en flexion qui sont mobiles en translation longitudinale les unes par rapport aux autres et par rapport à la peau à laquelle ce squelette est associé sans affecter la surface de la peau définissant l'empreinte de formage.

Cela permet de réduire le nombre de moyens de déformation de l'empreinte de formage sans avoir pour autant des angles ou discontinuités de courbure au niveau de l'empreinte de formage. En effet, les lattes permettent à la peau de bénéficier de leur élasticité en flexion, en donnant ainsi à l'empreinte de formage une courbure régulière.

Suivant un mode de réalisation avantageux, les lattes sont montées coulissantes dans des gaines souples, de préférence élastiquement étirables, solidaires de la peau de la membrane, de préférence noyées par surmoulage dans la peau. Ces gaines participent ainsi à la déformation de la peau sans la contrarier.

Dans le cadre de la présente invention, les moyens de déformation de la membrane peuvent être conçus de manière que la courbure imprimée à cette dernière soit convexe et/ou concave, donc en relief et/ou en creux par rapport au matériau en feuille placé au-dessus de la membrane. Cependant, suivant un mode de réalisation préféré, la courbure imprimée à la membrane par les moyens de déformation est une courbure concave et le matériau thermoplastique en feuille placé sur le côté concave de la membrane, lorsqu'il est chauffé, se déforme en s'étirant pour épouser la forme concave de la membrane, sous l'effet d'une dépression crée entre la membrane et le matériau thermoplastique.

De préférence, la membrane est traversée d'un réseau d'ouvertures d'aspiration reliées en dessous de la membrane à des moyens de dépression, de telle manière que la dépression ainsi produite entre la membrane et le matériau en feuille permettent à ce matériau de se plaquer sur la membrane et d'adopter fidèlement la courbure de cette dernière.

Ces ouvertures d'aspiration de la membrane sont de préférence garnies de manchons indéformables constituant des buses d'aspiration. Ces manchons indéformables permettent avantageusement de donner aux ouvertures d'aspiration une section très faible qui n'est en rien affectée par les déformations que la membrane subit sous l'effet des moyens de déformation de l'empreinte de formage.

La membrane peut avantageusement, sur la face constituant l'empreinte de formage, soit présenter un état dé surface rugueux, par exemple granuleux, soit être recouverte d'une couche d'un matériau perméable aux gaz, par exemple un matériau poreux, améliorant la circulation de l'air entre les ouvertures d'aspiration, afin d'éviter tout emprisonnement d'air entre la membrane et la feuille.

Les ouvertures d'aspiration traversant la membrane peuvent déboucher en dessous de la membrane par exemple dans un réseau de tuyaux souples et résistant à l'écrasement, reliés à des moyens de dépression, ou dans une poche souple reliée à ces moyens de dépression. Dans les deux cas, la dépression agit uniquement sur le dessus de la membrane pour plaquer le matériau en feuille sur l'empreinte de formage, et n'altère pas la forme imprimée à l'empreinte par la seule action des moyens de déformation sélective.

Dans un cas préféré, les moyens de déformation de la membrane sont conçus pour donner à la membrane un courbure concave. Dans ce cas, la prévision des ouvertures d'aspiration traversant la membrane, grâce auxquelles toutes les parties du matériau thermoplastique en feuille sont plaquées sur l'empreinte de formage au fur et à mesure qu'elles entrent en contact avec cette dernière, selon la profondeur varaible de l'empreinte, permet de déformer le matériau en lui faisant subir un étirage variable en fonction de la profondeur de l'empreinte. En l'occurrence, le degré d'étirage de la feuille augmente depuis les bords vers le centre, et le panneau découpé dans le matériau en feuille ainsi mis en forme présente une épaisseur variable en accord avec les zones d'efforts, à savoir une épaisseur et donc une résistance plus importante sur les bords et aux angles que dans la partie centrale. Cela est particulièrement avantageux dans le cas d'une voile monopièce.

Le réseau de lattes associées à la peau de la membrane pour rendre plus régulière la déformation de l'empreinte de formage, de même que le réseau de moyens de déformation de l'empreinte, peuvent être des réseaux uniformes ou de préférence, par exemple pour le formage de voiles, des réseaux non uniformes en ce sens que les lattes et les moyens de déformation de l'empreinte peuvent être davantage concentrés dans certaines zones, à savoir là où les courbures à imprimer au matériau en feuille sont plus prononcées. Tel est le cas pour les zones du bord d'attaque et de la base de voiles.

Une autre possibilité consiste à prévoir, entre des lattes plus épaisses directement soumises à l'action des moyens de déformation (vérins), des lattes intermédiaires plus fines, donc plus souples, qui ne sont pas directement soumises à l'action des moyens de déformation.

D'autres caractéristiques et applications de l'invention apparaîtront à la lecture de la description ci-après d'un mode de réalisation non limitatif illustré par les dessins annexés, sur lesquels:
la figure 1 est une vue de dessus schématique d'un mode de réalisation d'un dispositif selon l'invention dans son application à la fabrication d'une voile mise en forme par thermoformage;
la figure 2 est une coupe schématique du dispositif de la figure 1 pendant la phase de thermoformage;
la figure 3 est une coupe schématique correspondante du dispositif pendant la phase de découpe;
la figure 4 est une vue partielle de la membrane du dispositif des figures 1 à 3;
la figure 5 est une coupe partielle de la membrane montrant les lattes gainées noyées dans la peau de la membrane;
la figure 6 est une vue schématique simplifiée montrant un mode d'action des vérins de déformation de la membrane; ,
les figures 7 et 8 montrent schématiquement un dispositif destiné au thermoformage d'un matériau en feuille comprenant des fibres non thermoplastiques, et

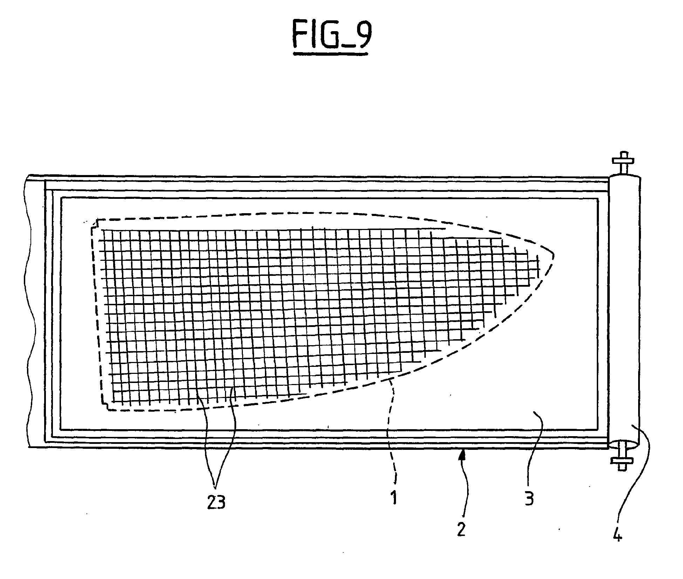

la figure 9 illustre une autre possibilité de mise en oeuvre de l'invention.

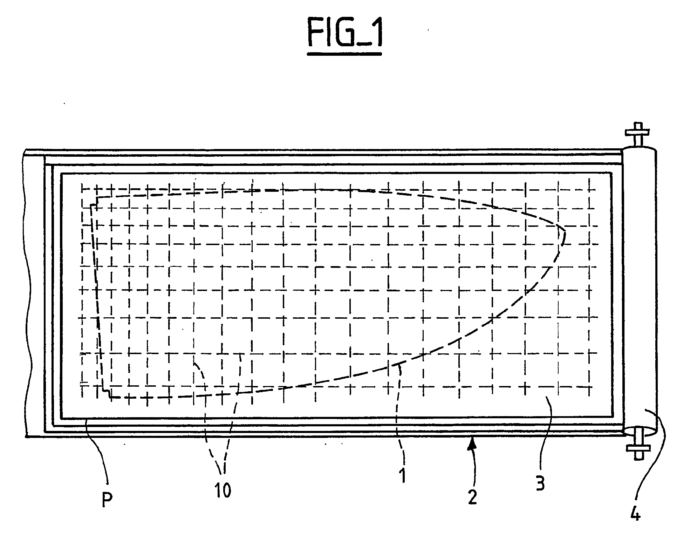

Selon les figures 1 à 3, la fabrication d'une voile 1 monopièce à courbure tridimensionnelle telle qu'illustrée en tirets sur la figure 1 s'effectue par thermoformage sous vide et découpe, sur un moule 2 à géométrie variable, d'un matériau thermoplastique en feuille 3 retiré d'une bobine 4 disposée à une extrémité du moule 2.

Le moule 2 comprend une empreinte de formage 5 concave définie par une membrane 6 en un matériau élastiquement étirable et résistant à la chaleur, placée sur le moule 2, des moyens 7 pour la déformation sélective de l'empreinte 5, et un cadre 8 pour tenir sur son pourtour le matériau en feuille 3 maintenu tendu à l'aide du cadre 8 à distance au-dessus de la membrane 6. A distance au-dessus du moule 2 et au-dessus du matériau en feuille 3 sont disposés des moyens de chauffage 9 pour le chauffage du matériau en feuille 3.

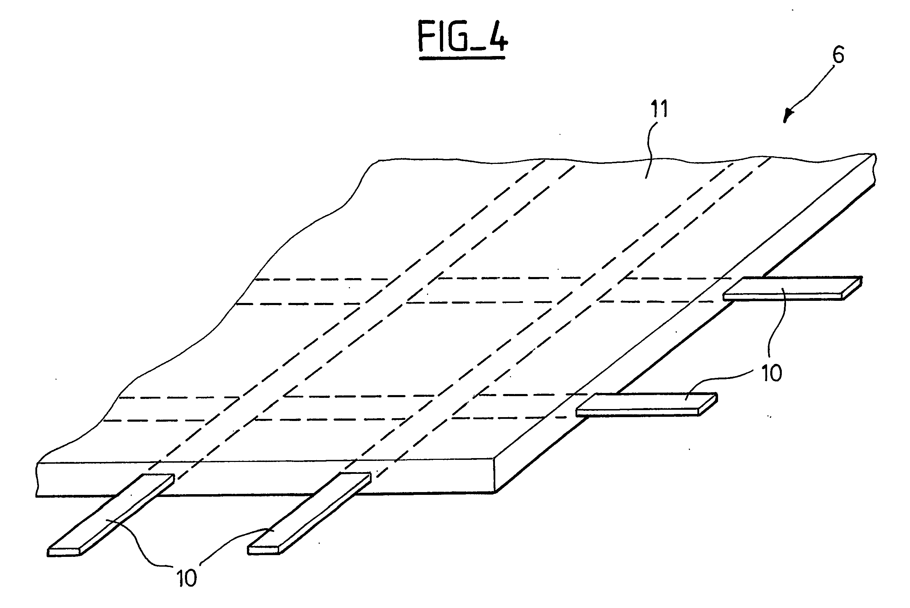

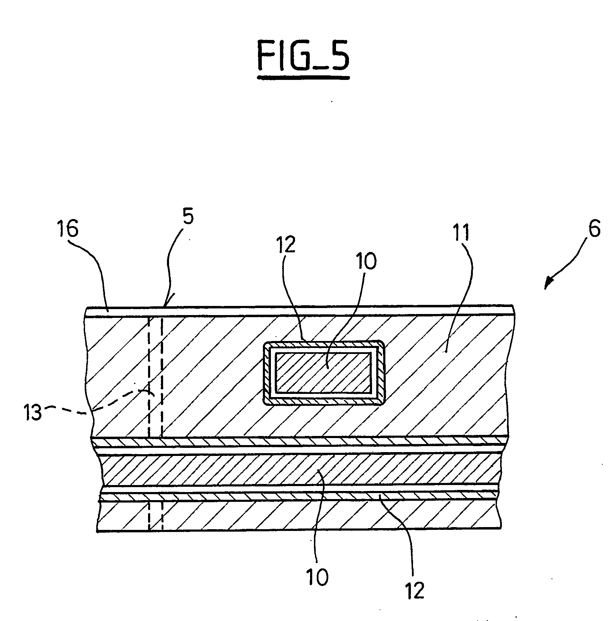

Selon les figures 4 et 5, la membrane 6 comprend un squelette formé par un quadrillage de lattes 10 élastiques en flexion, par exemple en fibres de carbone imprégnées de résine telle qu'une résine époxy, et une peau 11 en un matériau élastiquement étirable, par exemple un élastomère à base de silicone. Les lattes 10 sont entourées de gaines 12 souples (figure 5) dans laquelle elles peuvent coulisser longitudinalement et qui sont noyées par surmoulage dans la peau 11.

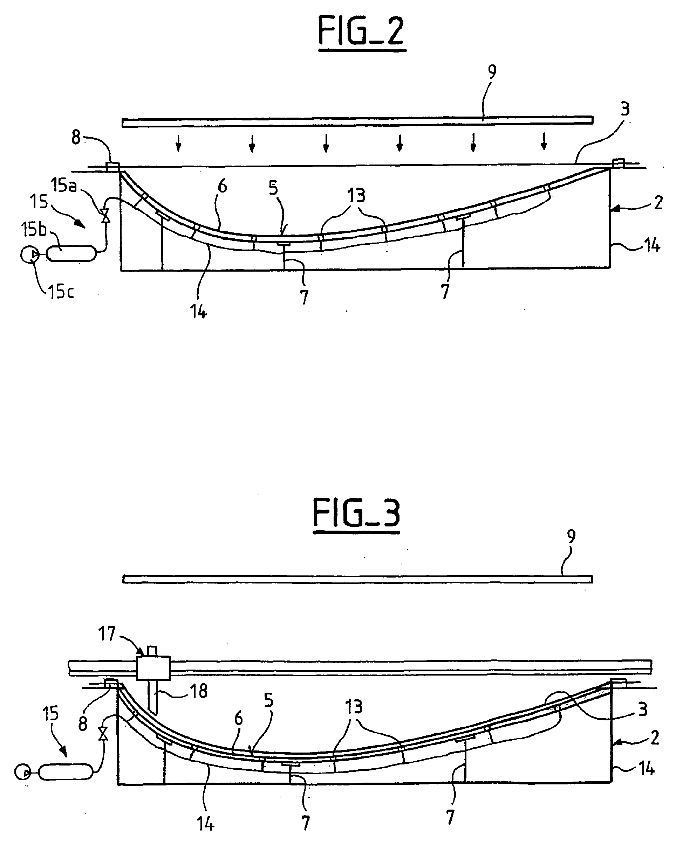

La peau 11 est traversée de part en part d'un réseau d'ouvertures d'aspiration 13 de préférence constituées par des buses de section bien définie sous forme de manchons indéformables noyés dans la peau. Ces ouvertures étant reliées dans cet exemple en dessous de la membrane 6 par des tuyaux 14 souples mais résistant à l'écrasement qu'ils subissent sous l'effet d'une dépression interne, à des moyens de dépression 15 comprenant, dans l'exemple illustré selon les figures 2 et 3, une vanne 15a, un réservoir-accumulateur 15b et une pompe à vide 15c.

Sur la face supérieure tournée vers l'empreinte de formage 5, la peau 11 de la membrane 6 est recouverte, selon la figure 5, d'une mince couche 16 d'un matériau perméable aux gaz, par exemple un matériau poreux tel qu'une mousse.

Les moyens 7 pour la déformation sélective de la membrane 6 peuvent être constitués, par exemple, par des vérins à vis ou des vérins à fluide, qui peuvent être avantageusement commandés à distance, de préférence par ordinateur, ce qui permet de faire sélectivement varier rapidement et de façon précise la forme de l'empreinte 5.

Les moyens de chauffage 9 peuvent comprendre un panneau chauffant, par exemple à rayonnement infrarouge, couvrant ici toute la surface de l'empreinte 5, ou tout autre dispositif approprié.

Les moyens de chauffage 9 sont par exemple déplaçables horizontalement, ce qui permet, après thermoformage du matériau en feuille 3 sur l'empreinte 5, leur retrait pour la mise en place par exemple d'un dispositif 17 de découpe du contour de la voile 1 dans le matériau en feuille 3 thermoformé et refroidi. Le dispositif de découpe 17 peut comprendre par exemple une tête 18 à lame coupante, à lame chauffante, à jet d'eau ou de préférence à laser, déplaçable sélectivement sur toute la surface du moule 2 et éventuellement en hauteur pour rester à hauteur constante de l'empreinte 5 par une commande qui peut être liée à la commande des vérins 7, pour ne pas détériorer la membrane 6.

Au lieu d'effectuer directement sur l'empreinte 5 la découpe du matériau en feuille 3 thermoformé, il est également possible de procéder sur l'empreinte 5 au traçage du matériau en feuille 3 thermoformé et d'effectuer la découpe à un autre poste par repérage optique du trait de traçage.

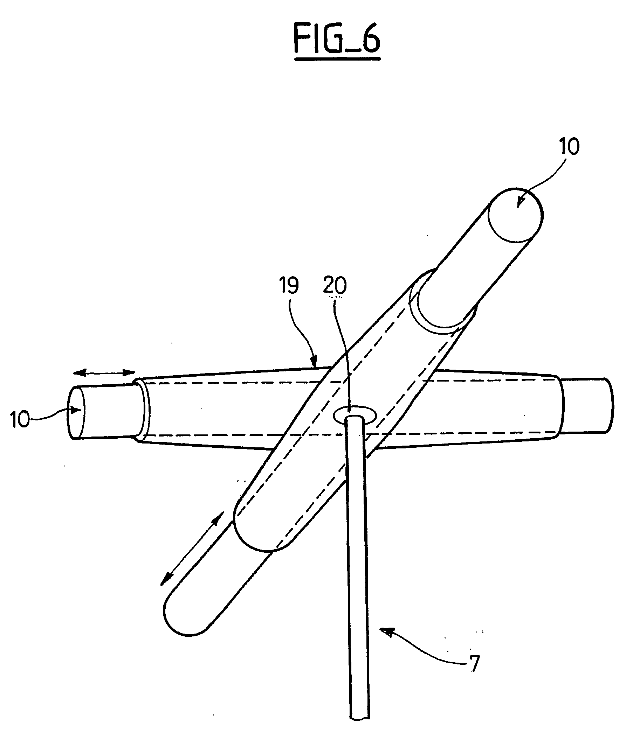

Selon la figure 6, les vérins 7 pour la déformation sélective de la membrane peuvent de préférence agir sur les lattes 10 qui présentent ici une section circulaire au lieu d'une section rectangulaire selon les figures 4 et 5. Plus précisément, chaque vérin 7 agit sur un guide 19 rigide traversé par au moins une latte, ce guide présentant, dans l'exemple illustré, la forme d'un croisillon traversée par deux lattes 10 à l'endroit du croisement de ces lattes. Les gaines non représentées ici des lattes 10 peuvent soit traverser les guides 19 avec les lattes, soit être interrompues à l'endroit des guides 19. Les guides 19 sont avantageusement noyés dans la peau non représentée ici de la membrane, tout comme la partie restante du squelette formé par le quadrillage de lattes 10, ou plus précisément les gaines 12 entourant les lattes 10.

Les guides 19 permettent aux lattes 10 de suivre les mouvements verticaux des vérins 7, lors du raccourcissement et de l'allongement de ces derniers, tout en leur laissant la possibilité de coulisser librement dans le sens de leur longueur par rapport à la peau.

Pour éviter que les vérins 7 ne gênent la déformation de l'empreinte dé formage, les vérins peuvent être avantageusement reliés de façon articulée, par exemple par une liaison 20 type rotule ou souple, aux guides 19 et éventuellement aussi à leur support d'ancrage.

Il convient de remarquer que des renforts de voiles (renforts d'angles, goussets de lattes, renforts de ris, etc) peuvent être encollés et disposés dans le moule pour être collés à la voile lors du thermoformage de cette dernière, ce qui permet de profiter de la dépression et de la chaleur de la phase de thermoformage pour plaquer ces pièces et pour faciliter la polymérisation de la colle, tout en réduisant le coût de main d'oeuvre.

Bien que le mode de réalisation illustré et décrit se rapporte au thermoformage, sur une empreinte de moule concave ou négative(en creux), d'une voile monopièce, l'invention n'est pas limitée à ce mode de réalisation et englobe au contraire non seulement le thermoformage sur une empreinte de moule convexe ou positive (en relief), mais également toutes combinaisons de ces deux variantes (voilés à inversion de courbure). Il convient de remarquer que dans le cas d'un moule convexe, il est nécessaire de prévoir des moyens pour produire un mouvement vertical entre le matériau à thermoformer, tenu dans le cadre, et le moule, car le matériau en feuille ne doit pas être en contact avec le moule pendant le chauffage. De tels moyens ne sont pas nécessaires lors du thermoformage sur un moule concave. En effet, dans ce cas, le matériau tenu dans le cadre, lors de son chauffage, se déforme par l'effet de la dépression vers le bas pour prendre la forme de l'empreinte de formage.

Par ailleurs, le thermoformage du matériau en feuille peut se faire non seulement par dépression, comme dans l'exemple illustré, mais également par pression ou par une combinaison des deux.

De plus, le matériau en feuille 3, au lieu d'être d'une seule pièce, pourrait également comprendre plusieurs panneaux assemblés soit d'avance, soit lors de la mise en forme.

Le matériau thermoplastique en feuille peut également être constitué par exemple par un film ou par un complexe ou stratifié de plusieurs films, par exemple de PET, de préférence bi-orienté ("MYLAR"), de PVC, de polycarbonate, pouvant être armé de fibres. Il peut s'agir en particulier de fibres continues (filaments) à haute résistance de rupture qui ne sont pas thermoplastiques, par exemple des fibres de carbone ou aramide. Pour permettre le thermoformage par étirage du film ou complexe thermoplastique malgré la présence de ces fibres, on peut utiliser par exemple dans ce cas un matériau en feuille qui est dépourvu de fibres dans la zone de son pourtour, donc au niveau du cadre de serrage 8. Cela évite le blocage des fibres par le cadre 8 et permet aux fibres de coulisser par rapport au matériau en feuille lors du thermoformage.

Notamment dans le cas de deux feuilles prenant de telles fibres entre elles, ce sont alors les feuilles qui bloquent les fibres (les mailles de fibres) en position déformée du matériau. Les fibres étant en quelque sorte retendues par le thermoformage du matériau, il en résulte un équilibrage des tensions.

Selon les cas, il est possible, soit de découper la voile après thermoformage, soit, pour éviter les chutes de matériau de voile que cela peut entraîner, de découper la voile avant sa mise en forme et de la thermoformer après l'avoir collée sur un matériau de transfert étirable bon marché, mais présentant des caractéristiques de thermoplasticité comparables à celles du matériau de voile.

Par ailleurs, l'invention concerne, également la mise en forme de matériaux en feuille qui ne sont pas en eux-mêmes imperméables, par exemple des tissus ou tricots, auquel cas, pour plaquer de tels matériaux contre l'empreinte de formage, on les associe à au moins un film imperméable qui permet alors ce placage par dépression.

Selon une variante, il est également possible d'enfermer de tels matériaux dans une enveloppe imperméable dans laquelle on fait le vide.

Il convient de remarquer que la présente invention porte également sur une voile monopièce formée d'un matériau thermoplastique sous forme d'au moins une feuille continue renforcée de fibres continues (filaments) de matière non thermoplastique telles que fibres de carbone ou aramide, cette feuille présentant une courbure tridimensionnelle permanente obtenue par thermoformage.

Toutefois, bien que la description ci-dessus concerne un exemple relatif à la fabrication de voiles pour des embarcations à voile, l'invention s'applique d'une manière générale à la fabrication de panneaux à courbure tridimensionnelle à faible développement de forme (de profondeur réduite) à partir de matériaux en feuille qui peuvent être thermoplastiques ou non. Il peut s'agir en l'occurrence entre autres de pièces de carrosserie, par exemple en matériaux thermodurcissables.

De plus, si dans l'exemple représenté et décrit, les lattes constituant le squelette de la membrane se présentent sous la forme d'un quadrillage, donc d'un réseau bi-directionnél, ces lattes peuvent, dans le cadre de la présente invention, se présenter sous la forme de réseaux différents, par exemple d'un réseau mono-directionnel ou également de tout autre réseau multi-directionnel.

En outre, le quadrillage des lattes 10 du squelette de la membrane (et le réseau de vérins 7 de déformation sélective dé la membrane) peut être régulier ou irrégulier. En particulier dans le cas de voiles, il peut ainsi être avantageux de rapprocher les lattes (et les vérins) davantage dans les zones du bord d'attaque et de la basé de la voile, là où les courbures sont plus prononcées, tel que cela apparaît sur la figure 1 où lés lattes 10 sont représentées symboliquement en pointillés.

On reconnaît également sur la figure 1 que les lattes 10 ne s'étendent pas jusqu'aux extrémités du moule, la membrane 6 étant à cet endroit plus fine, donc plus souple afin de pouvoir imposer au moule une forme vriée tout en maintenant l'étanchéité entre le moule et le cadre de maintien.

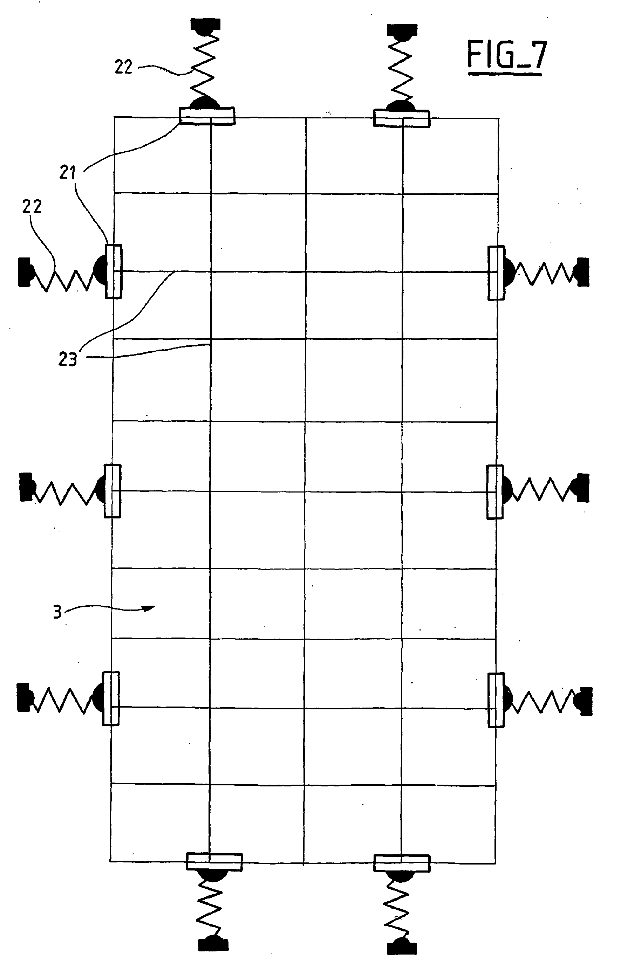

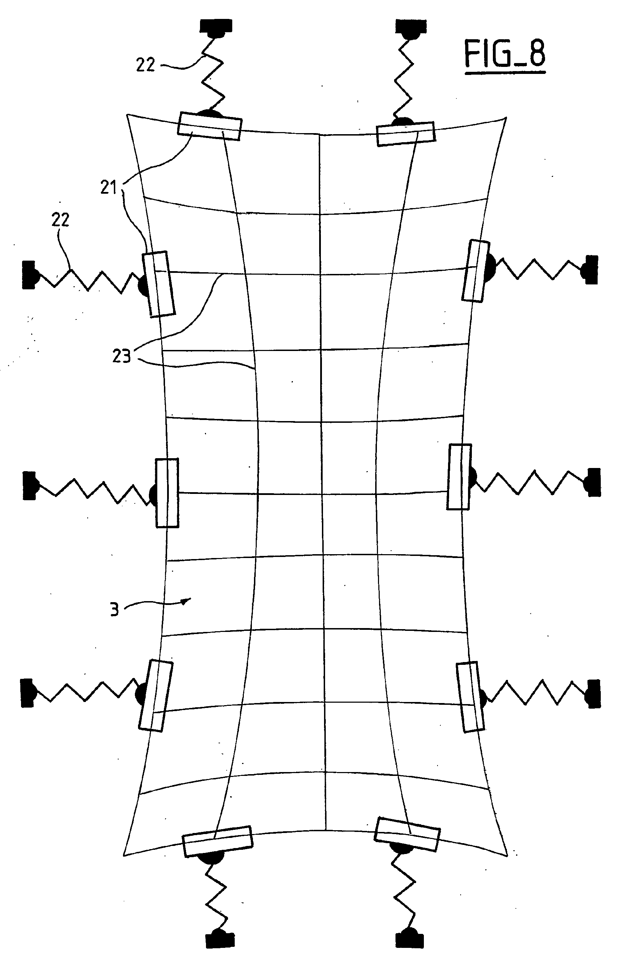

Dans le cas où le matériau thermoplastique en feuille comporte des fibres non thermoplastiques allant jusqu'aux bords, il peut être avantageux de maintenir le matériau en feuille sur le moule non pas à l'aide d'un cadre tel que le cadre 8 selon la figure 1. En effet, un tel cadre devrait dans ce cas d'exercer un serrage réduit bien défini pour laisser glisser les fibres tout en empêchant la formation de plis au niveau de la feuille. C'est pourquoi il peut alors être préférable d'utiliser pour le maintien de la feuille au niveau de ses bords un agencement tel qu'illustré par les figures 7 et 8, comprenant plusieurs points d'attache 21 définis par exemple par des mors répartis sur les bords, montés par exemple à l'aide de ressorts 22 ou de vérins avec articulation sur le moule permettent d'exercer un tension définie sur la feuille et de l'acompagner dans ses déplacements vers l'intérieur, lors de sa mise en forme sur l'empreinte de formage du fait de la présence des fibres 23 qui ne sont pas étirables. On reconnaît clairement sur la figure 8 la déformation différentielle que les cellules ou mailles des fibres de la feuille 3 subissent lors de la mise en forme de la feuille sur l'empreinte de formage à partir de l'état initial plat selon la figure 7 (les mailles des fibres ne sont représentées que très symboliquement).

Bien entendu, il est nécessaire dans ce cas, du fait de l'absence du cadre de maintien 8 qui assure également l'étanchéité, de prévoir un système d'étanchéité indépendant du système de maintien de la feuille.

Une autre possibilité de mise en oeuvre de l'invention illustrée très schématiquement sur la figuré 9 consiste à thermoformer la voile 1 dans un matériau en feuille 3 renforcé par des fibres 23 uniquement à l'intérieur du pourtour de la voile 1; en d'autres termes, les fibres 23 renforçant la voile 1 s'étendent dans le matériau en feuille3 sans aller jusqu'aux bords de la voile 1.

Pour réduire le nombre de vérins, il est également possible d'utiliser une membrane contenant d'une part un réseau peu dense de lattes 10 directement soumises à l'action des vérins (par exemple selon la figure 6) et, d'autre part des lattes plus fines et plus souples qui sont disposées entre ces lattes 10 et qui ne sont pas directement soumises à l'action des vérins.

Par ailleurs, selon la nature des panneaux à courbure tridimensionnelle à fabriquer, il peut être suffisant de faire agir les vérins ou autres moyens de déformation de l'empreinte de formage directement sur la peau plutôt que sur les lattes ou sur les croisillons ou autres guides rigides traversés par les lattes et noyés dans la peau de la membrane pourvue d'un squelette. Dans tous les cas, il est avantageux de relier les vérins à la membrane par une liaison souple ou articulée, par exemple du type rotule.

Selon les panneaux à réaliser, le cadre 8 qui sert à tenir le matériau en feuille lors du thermoformage peut être remplacé par des cadres de taille réduite, non représentés, adaptés à la taille et à la forme des panneaux.

Pour ce qui est de la forme du moule, il est possible d'utiliser des formes différentes de la forme rectangulaire représentée, par exemple une forme trapézoïdale, triangulaire ou autre.

Enfin, bien que cela ne soit pas illustré par les dessins, le moule 2 peut être avantageusement équipé de moyens de refroidissement du matériau en feuille 3 après thermoformage, tel que des ventilateurs ou d'autres moyens connus en soi, par exemple un réseau de circulation d'eau dans le moule (dans la membrane).

## Revendications

1. Dispositif pour la fabrication de panneaux à courbure tridimensionnelle à partir de matériau en feuille comprenant une empreinte de formage (5) définie par une membrane et un réseau de moyens (7) de déformation sélective de l'empreinte agissant sur ladite membrane pour imprimer à l'empreinte de formage (5) une courbure tridimensionnelle modulable, la membrane comprenant une peau (11) élastiquement étirable et un squelette associé à la peau (11), formé par un réseau de lattes (10) élastiques en flexion **caractérisé par le fait que** les lattes sont mobiles en translation dans le sens de leur longueur les unes par rapport aux autres et par rapport à la peau (11).

2. Dispositif suivant la revendication 1, **caractérisé par le fait que** les lattes (10) sont montées coulissantes dans des gaines (12) souples et étirables, solidaires de la peau (11).

3. Dispositif suivant la revendication 2, **caractérisé par le fait que** les gaines (12) sont noyées par surmoulage dans la peau (11).

4. Dispositif suivant l'une quelconque des revendications 1 à 3, **caractérisé par le fait que** les moyens de déformation de là membrane comprennent des vérins (7) reliés à la membrane (6) de façon articulée, par exemple par une liaison type rotule (20).

5. Dispositif suivant la revendication 4, **caractérisé par le fait que** les vérins (7) agissent sur les lattes (10).

6. Dispositif suivant la revendication 5, **caractérisé par le fait que** chaque vérin (7) agit sur un guide (19) rigide traversé par au moins une latte (10) et noyé dans la peau (11) de la membrane (6).

7. Dispositif suivant la revendication 6, **caractérisé par le fait que** le squelette est formé d'un réseau multi-directionnel de lattes (10) et que chaque vérin (7) agit sur un guide (20) en forme de croisillon traversé par au moins deux lattes (10) à l'endroit de leur croisement.

8. Dispositif suivant l'une quelconque des revendications précédentes, **caractérisé par le fait que** la membrane (6) est traversée d'un réseau d'ouvertures d'aspiration (13) reliées en dessous de la membrane à des moyens de dépression (14, 15).

9. Dispositif suivant la revendication 8, pour le thermoformage de matériau thermoplastique en feuille, **caractérisé par le fait qu'**il comprend, en outre, des moyens (8) pour tenir sur son pourtour le matériau en feuille (3) placé au-dessus de la membrane (6), et des moyens de chauffage (9) pour chauffer le matériau en feuille et lui permettre de se déformer en s'étirant pour épouser la forme de l'empreinte.

10. Dispositif suivant l'une quelconque des revendications précédentes, **caractérisé par le fait qu'**il comprend en outre des moyens (17, 18) de découpe ou de traçage du matériau en feuille sur l'empreinte de formage (5) après sa mise en forme sur l'empreinte.

11. Procédé de fabrication de panneaux à courbure tridimensionnelle à partir d'un matériau en feuille sur un moule à géométrie variable comprenant une empreinte de formage (5) définie par une membrane, dans lequel on imprime à l'empreinte de formage (5) une courbure tridimensionnelle modulable en agissant sur ladite membrane à l'aide d'un réseau de moyens (7) de déformation sélective de l'empreinte, la membrane comprenant une peau élastiquement étirable et un squelette associé à la peau (11) formé par un réseau de lattes (10) élastiques en flexion **caractérisé par le fait qu'**on provoque sélectivement une translation des lattes dans le sens de leur longueur les unes par rapport aux autres et par rapport à la peau (11).

12. Procédé suivant la revendication 11, **caractérisé par le fait qu'**on monte les lattes (10) coulissantes dans des gaines (12) souples et étirables, solidaires de la peau (11).

13. Procédé suivant la revendication 12, **caractérisé par le fait qu'**on dispose les gaines (12) noyées par surmoulage dans la peau (11).

14. Procédé suivant l'une quelconque des revendications 11 à 13, **caractérisé par le fait qu'**on agit sur la membrane à l'aide de moyens de déformation comprenant des vérins (7) reliés à la membrane (6) de façon articulée, par exemple par une liaison type rotule (20).

15. Procédé suivant la revendication 14, **caractérisé par le fait qu'**on agit à l'aide des vérins (7) sur les lattes (10).

16. Procédé suivant la revendication 15, **caractérisé par le fait qu'**on agit avec chaque vérin (7) sur un guide (19) rigide traversé par au moins une latte (10) et noyé dans la peau (11) de la membrane (6).

17. Procédé suivant la revendication 16, **caractérisé par le fait que** le squelette est formé d'un réseau multi-directionnel de lattes (10) et qu'on agit avec chaque vérin (7) sur un guide (20) en forme de croisillon traversé par au moins deux lattes (10) à l'endroit de leur croisement.

18. Procédé suivant l'une quelconque des revendications 11 à 17, **caractérisé par le fait qu'**on forme un vide à l'aide d'un réseau d'ouvertures d'aspiration (13) traversant la membrane (6) et reliées en dessous de la membrane à des moyens de dépression (14, 15).

19. Procédé suivant la revendication 18, dans lequel, pour le thermoformage de matériau thermoplastique en feuille, on tient sur son pourtour le matériau en feuille (3) placé au-dessus de la membrane (6), et on chauffe le matériau en feuille pour lui permettre de se déformer en s'étirant pour épouser la forme de l'empreinte.

20. Procédé selon l'une des revendications 18 ou 19, **caractérisé en ce qu'**on met en forme un matériau en feuille non imperméable en l'associant à un film non imperméable pour permettre le placage par dépression.

21. Procédé selon la revendication 20, dans lequel on enferme le matériau en feuille non imperméable dans une enveloppe imperméable dans laquelle on fait le vide.

22. Procédé suivant l'une quelconque des revendications 11 à 19, **caractérisé par le fait qu'**on découpe ou on trace le matériau en feuille sur l'empreinte de formage (5) après sa mise en forme sur l'empreinte.

23. Procédé selon l'une quelconque des revendications 11 à 22 dans lequel le panneau à courbure tridimensionnelle est une voile monopièce formée d'un matériau thermoplastique sous forme d'au moins une feuille continue renforcée de fibres continues (filaments) de matière non thermoplastique telles que fibres de carbone ou aramide.

24. Procédé selon la revendication 23, dans lequel on thermoforme la voile sur une empreinte concave, convexe ou concave et convexe pour obtenir une voile à inversion de courbure.

25. Procédé selon l'une des revendications 23 ou 24, dans lequel on dispose des renforts de voile dans le moule pendant le thermoformage.

26. Procédé selon l'une des revendications 11 à 22 dans lequel on part d'un matériau stratifié en feuille thermoplastique ou thermodurcissable constitué de plusieurs films et armé de filaments non thermoplastiques.

## Claims

1. Device for manufacturing three-dimensionally curved panels from sheet material comprising a forming impression (5) defined by a membrane and a network of means (7) for selectively deforming the impression acting on said membrane in order to impart to the forming impression (5) an adaptable three-dimensional curvature, the membrane comprising an elastically stretchable skin (11) and a skeleton associated with the skin (11), the skeleton being formed by a grid of battens (10) which can bend elastically, **characterized in that** the battens can move translationally in the direction of their length with respect to one another and with respect to the skin (11).

2. Device according to Claim 1, **characterized in that** the battens (10) are slideably mounted in flexible stretchable sheaths (12) attached to the skin (11).

3. Device according to Claim 2, **characterized in that** the sheaths (12) are embedded in the skin (11) by overmoulding.

4. Device according to any one of Claims 1 to 3, **characterized in that** the means for deforming the membrane comprise jacks (7) connected to the membrane (6) in an articulated fashion, for example via a connection of the ball joint type (20).

5. Device according to Claim 4, **characterized in that** the jacks (7) act on the battens (10).

6. Device according to Claim 5, **characterized in that** each jack (7) acts on a rigid guide (19) through which at least one batten (10) passes and which is embedded in the skin (11) of the membrane (6).

7. Device according to Claim 6, **characterized in that** the skeleton is formed of a multidirectional network of battens (10) and **in that** each jack (7) acts on a cross-shaped guide (20) through which at least two battens (10) pass at the point where they cross.

8. Device according to any one of the preceding claims, **characterized in that** the membrane (6) has, passing through it, a network of suction openings (13) connected underneath the membrane to underpressure means (14, 15).

9. Device according to Claim 8 for the thermoforming of thermoplastic sheet material, **characterized in that** it further comprises means (8) for holding, around its periphery, the sheet material (3) placed on top of the membrane (6) and heating means (9) for heating the sheet material and allowing it to deform by stretching in order to adopt the shape of the impression.

10. Device according to any one of the preceding claims, **characterized in that** it further comprises means (17, 18) for cutting out or tracing the sheet material on the forming impression (5) after it is formed on the impression.

11. Process for manufacturing three-dimensionally curved panels from sheet material on a variable-geometry mould comprising a forming impression (5) defined by a membrane, in which an adaptable three-dimensional curvature is imparted in order to the forming impression (5) by acting on said membrane using a network of means (7) for selectively deforming the impression, the membrane comprising an elastically stretchable skin and a skeleton associated with the skin (11), said skeleton being formed by a grid of battens (10) which can bend elastically, **characterized in that** the battens are selectively made to move translationally in the direction of their length with respect to one another and with respect to the skin (11).

12. Process according to Claim 11, **characterized in that** the battens (10) are slideably mounted in flexible stretchable sheaths (12) attached to the skin (11).

13. Process according to Claim 12, **characterized in that** the sheaths (12) are placed embedded in the skin (11) by overmoulding.

14. Process according to any one of Claims 11 to 13, **characterized in that** the membrane is acted upon using deformation means comprising jacks (7) connected to the membrane (6) in an articulated fashion, for example via a connection of the ball joint type (20).

15. Process according to Claim 14, **characterized in that** the battens (10) are acted upon using the jacks (7).

16. Process according to Claim 15, **characterized in that** each jack (7) acts on a rigid guide (19) through which at least one batten (10) passes and which is embedded in the skin (11) of the membrane (6).

17. Process according to Claim 16, **characterized in that** the skeleton is formed of a multidirectional network of battens (10) and **in that** each jack (7) acts on a cross-shaped guide (20) through which at least two battens (10) pass at the point where they cross.

18. Process according to any one of Claims 11 to 17, **characterized in that** a vacuum is created using a network of suction openings (13) that pass through the membrane (6) and are connected underneath the membrane to underpressure means (14, 15).

19. Process according to Claim 18, in which, for the thermoforming of the thermoplastic material in sheet form (3), the latter is held around its periphery, said material being placed on top of the membrane (6), and the sheet material is heated to allow it to deform by stretching in order to adopt the shape of the impression.

20. Process according to either of Claims 18 and 19, **characterized in that** a non-impermeable sheet material is formed by combining it with a non-impermeable film in order to allow vacuum pressing.

21. Process according to Claim 20, in which the non-impermeable sheet material is enclosed in an impermeable envelope in which the vacuum is created.

22. Process according to any one of Claims 11 to 19, **characterized in that** the sheet material is cut out or traced on the forming impression (5) after it has been formed on the impression.

23. Process according to any one of Claims 11 to 22, in which the panel with a three-dimensional curvature is a single-piece sail formed from a thermoplastic material in the form of a continuous sheet reinforced with continuous fibres (filaments) of non-thermoplastic material, such as carbon or aramid fibres.

24. Process according to Claim 23, in which the sail is thermoformed on a concave, convex or concavo-convex impression in order to obtain a sail with curvature inversion.

25. Process according to either of Claims 23 and 24, in which sail reinforcements are placed in the mould during the thermoforming.

26. Process according to one of Claims 11 to 22, which starts with a thermoplastic-sheet or thermosetting-sheet laminate material consisting of several films and reinforced with non-thermoplastic filaments.

## Patentansprüche

1. Vorrichtung zur Herstellung von Bahnen mit dreidimensionaler Krümmung ausgehend von einem Folienmaterial, die einen von einer Membran definierten Formgebungsabdruck (5) und ein Netz von Mitteln (7) zur selektiven Verformung des Abdrucks aufweist, die auf die Membran einwirken, um dem Formgebungsabdruck (5) eine modulierbare dreidimensionale Krümmung zu verleihen, wobei die Membran eine elastisch dehnbare Haut (11) und ein der Haut (11) zugeordnetes Gerüst aufweist, das von einem Netz von biegeelastischen Latten (10) gebildet wird, **dadurch gekennzeichnet, dass** die Latten in Richtung ihrer Länge zueinander und zur Haut (11) translationsbeweglich sind.

2. Vorrichtung nach Anspruch 1, **dadurch gekennzeichnet, dass** die Latten (10) in geschmeidigen und dehnbaren Hüllen (12) gleitend montiert sind, die fest mit der Haut (11) verbunden sind.

3. Vorrichtung nach Anspruch 2, **dadurch gekennzeichnet, dass** die Hüllen (12) durch Überformen in der Haut (11) versenkt werden.

4. Vorrichtung nach einem der Ansprüche 1 bis 3, **dadurch gekennzeichnet, dass** die Mittel zur Verformung der Membran Druckzylinder (7) aufweisen, die mit der Membran (6) zum Beispiel über eine Verbindung vom Typ Kugelgelenk (20) gelenkig verbunden sind.

5. Vorrichtung nach Anspruch 4, **dadurch gekennzeichnet, dass** die Druckzylinder (7) auf die Latten (10) einwirken.

6. Vorrichtung nach Anspruch 5, **dadurch gekennzeichnet, dass** jeder Druckzylinder (7) auf eine steife Führung (19) einwirkt, die von mindestens einer Latte (10) durchquert wird und in die Haut (11) der Membran (6) versenkt ist.

7. Vorrichtung nach Anspruch 6, **dadurch gekennzeichnet, dass** das Gerüst von einem multidirektionalen Netz von Latten (10) geformt wird, und dass jeder Druckzylinder (7) auf eine Führung (20) in Form eines Kreuzstücks einwirkt, das von mindestens zwei Latten (10) an der Stelle durchquert wird, wo sie sich kreuzen.

8. Vorrichtung nach einem der vorhergehenden Ansprüche, **dadurch gekennzeichnet, dass** die Membran (6) von einem Netz von Saugöffnungen (13) durchquert wird, die unter der Membran mit Unterdruckmitteln (14, 15) verbunden sind.

9. Vorrichtung nach Anspruch 8 zum Thermoformen eines thermoplastischen Folienmaterials, **dadurch gekennzeichnet, dass** sie außerdem Mittel (8), um das über der Membran (6) angeordnete Folienmaterial (3) an seinem Umfang zu halten, und Heizmittel (9) aufweist, um das Folienmaterial zu erwärmen und es ihm zu ermöglichen, sich dehnend zu verformen, um die Form des Abdrucks anzunehmen.

10. Vorrichtung nach einem der vorhergehenden Ansprüche, **dadurch gekennzeichnet, dass** sie außerdem Mittel (17, 18) zum Schneiden oder Anzeichnen des Folienmaterials auf dem Formgebungsabdruck (5) nach seinem Formen auf dem Abdruck aufweist.

11. Verfahren zur Herstellung von Bahnen mit dreidimensionaler Krümmung ausgehend von einem Folienmaterial auf einem Formwerkzeug mit variabler Geometrie, das einen von einer Membran definierten Formgebungsabdruck (5) aufweist, wobei dem Formgebungsabdruck (5) eine modulierbare dreidimensionale Krümmung verliehen wird, indem mit Hilfe eines Netzes von Mitteln (7) zur selektiven Verformung des Abdrucks auf die Membran eingewirkt wird, wobei die Membran eine elastisch dehnbare Haut und ein der Haut (11) zugeordnetes Gerüst aufweist, das von einem Netz von biegeelastischen Latten (10) gebildet wird, **dadurch gekennzeichnet, dass** selektiv eine Translationsbewegung der Latten in Richtung ihrer Länge zueinander und zur Haut (11) bewirkt wird.

12. Verfahren nach Anspruch 11, **dadurch gekennzeichnet, dass** die Latten (10) in geschmeidigen und dehnbaren Hüllen (12) gleitend montiert werden, die fest mit der Haut (11) verbunden sind.

13. Verfahren nach Anspruch 12, **dadurch gekennzeichnet, dass** die Hüllen (12) durch Überformen versenkt in der Haut (11) angeordnet werden.

14. Verfahren nach einem der Ansprüche 11 bis 13, **dadurch gekennzeichnet, dass** mit Hilfe von Verformungsmitteln, die zum Beispiel durch eine Verbindung vom Typ Kugelgelenk (20) gelenkig mit der Membran (6) verbundene Druckzylinder (7) enthalten, auf die Membran eingewirkt wird.

15. Verfahren nach Anspruch 14, **dadurch gekennzeichnet, dass** mit Hilfe der Druckzylinder (7) auf die Latten (10) eingewirkt wird.

16. Verfahren nach Anspruch 15, **dadurch gekennzeichnet, dass** mit jedem Druckzylinder (7) auf eine steife Führung (19) eingewirkt wird, die von mindestens einer Latte (10) durchquert wird und in die Haut (11) der Membran (6) versenkt ist.

17. Verfahren nach Anspruch 16, **dadurch gekennzeichnet, dass** das Gerüst von einem multidirektionalen Netz von Latten (10) gebildet wird, und dass mit jedem Druckzylinder (7) auf eine Führung (20) in Form eines Kreuzstücks eingewirkt wird, das von mindestens zwei Latten (10) an der Stelle durchquert wird, wo sie sich kreuzen.

18. Verfahren nach einem der Ansprüche 11 bis 17, **dadurch gekennzeichnet, dass** mit Hilfe eines Netzes von Saugöffnungen (13), die die Membran (6) durchqueren und unter der Membran mit Unterdruckmitteln (14, 15) verbunden sind, ein Vakuum hergestellt wird.

19. Verfahren nach Anspruch 18, bei dem zum Thermoformen eines thermoplastischen Folienmaterials das über der Membran (6) angeordnete Folienmaterial (3) an seinem Umfang gehalten und erwärmt wird, um es ihm zu ermöglichen, sich in Dehnung zu verformen, um die Form des Abdrucks anzunehmen.

20. Verfahren nach einem der Ansprüche 18 oder 19, **dadurch gekennzeichnet, dass** ein nicht undurchlässiges Folienmaterial geformt wird, indem es einem nicht undurchlässigen Film zugeordnet wird, um das Plattieren durch Unterdruck zu ermöglichen.

21. Verfahren nach Anspruch 20, bei dem das nicht undurchlässige Folienmaterial in einer undurchlässigen Hülle eingeschlossen wird, in der ein Vakuum hergestellt wird.

22. Verfahren nach einem der Ansprüche 11 bis 19, **dadurch gekennzeichnet, dass** das Folienmaterial auf dem Formgebungsabdruck (5) nach seinem Formen auf dem Abdruck geschnitten oder angezeichnet wird.

23. Verfahren nach einem der Ansprüche 11 bis 22, bei dem die Bahn mit dreidimensionaler Krümmung ein einstückiges Segel ist, das aus einem thermoplastischen Material in Form mindestens einer durchgehenden Folie geformt wird, die von durchgehenden Fasern (Filamenten) aus nichtthermoplastischem Material verstärkt wird, wie zum Beispiel Kohlenstoff- oder Aramidfasern.

24. Verfahren nach Anspruch 23, bei dem das Segel auf einem konkaven, konvexen oder konkaven und konvexen Abdruck thermogeformt wird, um ein Segel mit Krümmungsumkehr zu erhalten.

25. Verfahren nach einem der Ansprüche 23 oder 24, bei dem während der Thermoformung Segelverstärkungen im Formwerkzeug angeordnet werden.

26. Verfahren nach einem der Ansprüche 11 bis 22, bei dem von einem mehrlagigen Material aus thermoplastischer oder wärmehärtbarer Folie ausgegangen wird, die aus mehreren Filmen besteht und mit nicht thermoplastischen Filamenten verstärkt ist.
